Europäisches Patentamt

European Patent Office

Office européen des brevets

(11) Veröffentlichungsnummer : **0 662 505 A1**

(12) **EUROPÄISCHE PATENTANMELDUNG**

(21) Anmeldenummer : 95100212.0

(22) Anmeldetag : 09.01.95

(51) Int. Cl.$^6$ : **C10G 11/10**

(30) Priorität : **10.01.94 DE 4400430**

(43) Veröffentlichungstag der Anmeldung :
**12.07.95 Patentblatt 95/28**

(84) Benannte Vertragsstaaten :
**AT BE DE ES IT NL PT**

(71) Anmelder : **Linde Aktiengesellschaft**
**Abraham-Lincoln-Strasse 21**
**D-65189 Wiesbaden (DE)**

(71) Anmelder : **VEBA OEL AG**
**Alexander-von-Humboldt-Strasse**
**D-45896 Gelsenkirchen (DE)**

(72) Erfinder : **Kaufmann, Dieter, Dr.-Ing.**
**Rosenweg 52**
**D-82538 Geretsried (DE)**
Erfinder : **Zimmermann, Heinz, Dr.-Ing.**
**Irminsulstrasse 14a**
**D-81476 München (DE)**
Erfinder : **Rupp, Martin, Dr.-Ing.**
**Bernhardstrasse 32**
**D-45239 Essen (DE)**
Erfinder : **Baldauf, Wolfgang, Dr.-Ing.**
**Goethestrasse 10**
**D-46282 Dorsten (DE)**
Erfinder : **Jägers, Hans-Gerd, Dr. rer. nat.**
**Josefstrasse 79**
**D-45966 Gladbeck (DE)**

(74) Vertreter : **Kasseckert, Rainer**
**Linde Aktiengesellschaft,**
**Zentrale Patentabteilung**
**D-82049 Höllriegelskreuth (DE)**

(54) **Verfahren zum thermokatalytischen Spalten von höhersiedenden Kohlenwasserstoffen und Spaltofen.**

(57) Die Erfindung betrifft ein Verfahren zum thermokatalytischen Spalten von höhersiedenden Kohlenwasserstoff-Fraktionen zur Gewinnung von niederen Olefinen, insbesondere von Ethylen, in einem Spaltofen (3) mit Konvektions- (4) und Strahlungszone (16), wobei die Kohlenwasserstoffe in der Konvektionszone (4) mit Wasserdampf vermischt und in der Strahlungszone (16) thermisch gespalten werden, wobei bei der Spaltung gebildeter Koks mit Wasserdampf nach der Wassergasreaktion an einem Katalysator (17) in $CO$, $CO_2$ und $H_2$ vergast wird und wobei der bei der katalytischen Vergasung gewonnene Wasserstoff für die Spaltung der Kohlenwasserstoffe zur Verfügung steht. Erfindungsgemäß wird die thermokatalytische Spaltung in der Strahlungszone (16) in mit Katalysator (17) gefüllten und parallel geschalteten Reaktionsrohren (15) ohne Krümmer durchgeführt. Mit Vorteil werden die Reaktionsrohre (15) gerade und ohne Verzweigungen durch die Strahlungszone (16) des Spaltofens (3) geführt. Für das Verfahren eignet sich ein auf Calciumaluminatbasis aufgebauter Katalysator (17) mit einer Dotierung von Alkalivanadat, insbesondere von Kaliumpyrovanadat. Mit Vorteil sind die Reaktionsrohre (15) über ihre gesamte Länge in der Strahlungszone (16) mit Katalysator (17) gefüllt. Die Strahlungszone (16) kann mit Deckenbrennern (18) befeuert werden.

Fig.1

Die Erfindung betrifft ein Verfahren zum thermokatalytischen Spalten von höhersiedenden Kohlenwasserstoff-Fraktionen zur Gewinnung von niederen Olefinen, insbesondere von Ethylen, in einem Spaltofen mit Konvektions- und Strahlungszone, wobei die Kohlenwasserstoffe in der Konvektionszone mit Wasserdampf vermischt und in der Strahlungszone thermisch gespalten werden, wobei bei der Spaltung gebildeter Koks mit Wasserdampf nach der Wassergasreaktion an einem Katalysator in CO, $CO_2$ und $H_2$ vergast wird und wobei der bei der katalytischen Vergasung gewonnene Wasserstoff für die Spaltung der Kohlenwasserstoffe zur Verfügung steht. Die Erfindung betrifft ferner einen Spaltofen zum thermokatalytischen Spalten von Kohlenwasserstoffen mit mindestens einer Konvektions- und Strahlungszone.

Die Nutzung schwerer Kohlenwasserstoff-Einsätze wie atmosphärisches Gasöl oder Vakuumgasöl zur Erzeugung petrochemischer Grundprodukte, insbesondere zur Erzeugung von Olefinen wie Ethylen und Propylen, setzt für die konventionelle Spaltung der Kohlenwasserstoffe in Wasserdampfatmosphäre (Steamcracken) in der Regel eine hydrierende Vorbehandlung der Kohlenwasserstoff-Einsätze voraus, da einerseits schwere Einsätze einen geringen Wasserstoffgehalt aufweisen und andererseits der Wasserstoffgehalt direkt mit der Olefinausbeute korrelierbar ist. Durch die Spaltung von hydrierten Kohlenwasserstoff-Produkten kann folglich eine deutlich höhere Ausbeute erzielt werden. Die so erreichbaren Olefinausbeuten liegen im Bereich der Ausbeuten üblicher flüssiger Einsätze (Naphtha).

Beim Steamcracken bilden sich in den Spaltrohren Kohlenstoffablagerungen, insbesondere Koks, was eine periodische Entkokung der Öfen erforderlich macht. Die Zeiträume zwischen den Entkokungen werden von der Spaltschärfe und der Einsatzqualität der Kohlenwasserstoff-Fraktionen bestimmt. Insbesondere bei schweren Einsätzen fallen die Zeiträume zwischen zwei Entkokungen sehr kurz aus.

Beim thermokatalytischen Spalten von Kohlenwasserstoffen wird ein Vergasungskatalysator eingesetzt, der zum einen den abgelagerten Koks vergast und zum anderen den für die Erhöhung der Olefinausbeute benötigten Wasserstoff über die Wassergas-Reaktion

$$C + H_2O \rightarrow CO + H_2$$

und

$$CO + H_2O \rightarrow CO_2 + H_2$$

erzeugt. Damit entfällt die beim Steamcracken erforderliche Entkokung der Strahlungszone, während gleichzeitig Wasserstoff für die Olefinproduktion zur Verfügung gestellt wird. Aus der Patentschrift DD-243 708 A1 ist ein derartiges Verfahren zum thermokatalytischen Spalten von höhersiedenden Kohlenwasserstoffen bekannt. Dabei wird ein Vergasungskatalysator eingesetzt, der auf Calciumaluminatbasis aufgebaut ist und mit einem Alkalivanadat wie Kaliumpyrovanadat dotiert ist. Ein derartiger Vergasungskatalysator und ein Verfahren zu seiner Herstellung wird in der deutschen Patentschrift DD-243 647 A1 beschrieben.

Bei der thermischen Spaltung von Kohlenwasserstoffen, insbesondere von schweren Kohlenwasserstoffen, werden Spaltöfen mit zumindest einer Konvektions- und Strahlungszone eingesetzt. Die thermische Spaltung wird dabei in der brennerbeheizten Strahlungszone durchgeführt, während in der Konvektionszone die Kohlenwasserstoffe und andere Fluide durch dort angeordnete Wärmetauscher gegen Rauchgas erhitzt werden. Üblicherweise werden Kohlenwasserstoffe und Prozeßdampf in den Wärmetauschern der Konvektionszone vorgewärmt und ein Kohlenwasserstoff/ Dampfgemisch den in der Strahlungszone angeordneten Rohrschlangen (coils) zugeführt. Derartige Verfahren und Spaltöfen sind beispielsweise aus der DE-OS 28 30 824 und der DE-PS 28 54 061 bekannt.

Bei der Ausführung der thermokatalytischen Spaltung von Kohlenwasserstoffen in herkömmlichen Spaltrohrschlangen werden die Spaltrohre zumindestens teilweise mit dem Vergasungskatalysator gefüllt. Es hat sich gezeigt, daß die Katalysatorfüllungen für die thermokatalytische Spaltung in den konventionellen Reaktionsrohrschlangen in Pyrolyseöfen in Steamcrackern eine Reihe von Problemen mit sich bringen. Durch die Katalysatorfüllungen in den Reaktionsrohren erhöht sich der Druckverlust der einzelnen Reaktionsrohrschlangen erheblich. Ferner ist das Eigengewicht der katalysatorgefüllten Reaktionsrohre gegenüber ungefüllten Reaktionsrohren deutlich vergrößert. Neben einem im Verfahren unerwünscht hohen Druckabfall über die Reaktionsrohre führt das zu einer wesentlich stärkeren Belastung der Reaktionsrohre bei der thermokatalytischen Spaltung. Der hohe Druckabfall in den Reaktionsrohren wiederum macht erforderlich, daß die Wandstärke der Reaktionsrohre erhöht werden muß.Aufgrund des erhöhten Druckabfalls ist eine Erhöhung der Strahlungszonentemperatur erforderlich, wodurch die Beanspruchung des Spaltofens insgesamt, insbesondere aber auch die der Reaktionsrohre, weiter zunimmt.

Der Erfindung liegt daher die Aufgabe zugrunde, ein Verfahren und einen Spaltofen der eingangs genannten Art aufzuzeigen, wobei die genannten Nachteile vermieden werden und wobei insbesondere der Wärmeeintrag auf das durch die Reaktionsrohre fließende Kohlenwasserstoff/Dampfgemisch einen Wert einnimmt, der dem beim konventionellen thermischen Spalten vergleichbar ist. Insbesondere soll außerdem ein hoher Wirkungsgrad für die Thermokatalyse sichergestellt und die Pyrolysebedingungen der Strahlungszone vor allem durch die Anforderungen an die Produktzusammensetzung der gewonnenen Spaltgase und die Spalt-

2

schärfe bestimmt sein.

Diese Aufgabe wird für das erfindungsgemäße Verfahren dadurch gelöst, daß die thermokatalytische Spaltung in der Strahlungszone in mit Katalysator gefüllten und parallel geschalteten Reaktionsrohren ohne Krümmer durchgeführt wird.

Die Verwendung von parallel geschalteten Reaktionsrohren ohne Krümmer ermöglicht, daß auf eine Erhöhung der Wandstärke der Reaktionsrohre zumindestens im wesentlichen verzichtet werden kann. Darüber hinaus kann der Druckabfall in den Reaktionsrohren im Vergleich zu Reaktionsrohrschlangen merklich gesenkt werden.

Mit dem erfindungsgemäßen Verfahren können mehrere Kohlenwasserstoff-Einsätze, wie atmosphärisches Gasöl, Vakuum-Gasöl oder auch hydriertes Vakuum-Gasöl verarbeitet werden. Die höhersiedenden Kohlenwasserstoff-Fraktionen können Schwefel- und/oder Stickstoffverbindungen enthalten. Als Einsatzstoffe im erfindungsgemäßen Verfahren können auch schwere Kohlenwasserstoffe enthaltende Abfallprodukte oder Kunststoffrecyclate Verwendung finden. Die Verarbeitung von schweren Kohlenwasserstoff-Einsätzen minderer Qualität ist aus ökologischen Gesichtspunkten wünschenswert und durch schärfere Umweltauflagen notwendig. Die Spaltung von schweren Einsätzen minderer Qualität ist aber auch wirtschaftlich rentabel, da das erfindungsgemäße Verfahren ermöglicht, daß hohe Ausbeuten an Produkten bei der Spaltung gewonnen werden. Gleichzeitig gewährleistet das erfindungsgemäße Verfahren eine permanente Betriebsweise ohne Entkokungsunterbrechungen. Darüber hinaus kann eine vorherige Hydrierung des Kohlenwasserstoff-Einsatzes entfallen.

Besondere Vorteile im erfindungsgemäßen Verfahren sind dadurch erzielbar, daß die Reaktionsrohre gerade und ohne Verzweigungen durch die Strahlungszone des Spaltofens geführt werden. Gerade, unverzweigte Reaktionsrohre führen gegenüber konventionellen Spaltrohren mit Verzweigungen und gegebenenfalls mit Krümmern zu einer weiteren Verringerung des Druckabfalls in den Reaktionsrohren und einer deutlich reduzierten mechanischen Belastung. Es hat sich gezeigt, daß bei Verwendung von geraden und unverzweigten Reaktionsrohren die Olefinausbeute des Spaltprodukts aufgrund der kurzen Verweilzeit besonders hoch ausfällt und eine gute Selektivität der Spaltung erzielt wird. Die Einsatzqualität der Kohlenwasserstoff-Fraktionen wird üblicherweise durch den BMCI-Wert (Bureau of Mines Corellation Index) charakterisiert, der in etwa dem Gehalt an Aromaten des Kohlenwasserstoff-Einsatzes entspricht. Einsätze mit einem relativ niedrigen BMCI-Wert lassen sich also besonders gut spalten. Durch das erfindungsgemäße thermokatalytische Spaltverfahren können Kohlenwasserstoff-Einsätze sogar bis zu einem BMCI-Wert von etwa 60 rentabel verarbeitet werden.

Für das erfindungsgemäße Verfahren eignet sich ein auf Calciumaluminatbasis aufgebauter Katalysator mit einer Dotierung von Alkalivanadat, insbesondere von Kaliumpyrovanadat. Die Vergasungsaktivität des Katalysators ist durch seine Zusammensetzung bestimmt. Durch die Wahl einer bestimmten Zusammensetzung des Vergasungskatalysators kann die Vergasungsaktivität des Katalysators also an die Verkokungstendenz des Kohlenwasserstoff-Einsatzes angepaßt werden. Damit kann eine übermäßige Vergasung des Spalteinsatzes verhindert werden. Allerdings muß gewährleistet bleiben, daß die Vergasungsaktivität des Katalysators ausreicht, um Kohlenstoffablagerung bzw. Koks in den Reaktionsrohren zu unterbinden, oder auf ein unschädliches Maß zu beschränken. Untersuchungen haben überraschenderweise ergeben, daß eine hohe Vergasungsaktivität nicht zu einer Verringerung der Olefinausbeuten führt, sondern vielmehr bei einer hohen Vergasungsaktivität die Menge an Pyrolyseöl, d.h. die Produktfraktion mit einem Siedepunkt über ca. 200°C, deutlich abnimmt. Dieser Effekt zeigt, daß in der Spaltzone eine "in situ"-Hydrierung stattfindet, da eine hohe Vergasungsrate mit einer hohen Wasserstoffproduktion einhergeht. Damit kann auf eine hydrierende Vorbehandlung der schweren Kohlenwasserstoffe unter dem erforderlichen hohen Druck verzichtet werden.

Bewährt hat sich eine Betriebsweise des erfindungsgemäßen Verfahrens, wobei der Druckverlust bzw. der Druckabfall in den Reaktionsrohren Werte zwischen 0,5 und 8,0 bar, vorzugsweise zwischen 1,0 und 6,0 bar, einnimmt. Mit Vorteil beträgt der Druck der Spaltprodukte am Austritt aus den Reaktionsrohren zwischen 1,0 und 2,5 bar absolut, vorzugsweise zwischen 1,0 und 2,0 bar absolut.

Der Vergasungskatalysator im erfindungsgemäßen Verfahren kann besonders effektiv eingesetzt werden, wenn die Katalysatorbelastung, d.h. das Verhältnis der Masse des Kohlenwasserstoff-Einsatzes pro Stunde zur Masse des Katalysators, einen Wert zwischen 0,7 und 2,0 g/g·h, vorzugsweise zwischen 0,75 und 1,8 g/g·h, besonders bevorzugt zwischen 1,0 und 1,8 g/g·h, aufweist.

Beim thermischen Spalten von Kohlenwasserstoffen wird ein inertes Hilfsmedium zur Verdünnung der zu spaltenden Kohlenwasserstoffe eingesetzt. Üblicherweise wird dazu überhitzter Wasserdampf verwendet. Beim erfindungsgemäßen thermokatalytischen Spalten von Kohlenwasserstoffen tritt der Wasserdampf als aktiver Reaktionspartner bei der Wassergasreaktion in Erscheinung. Dabei hat sich eine Dampfverdünnung, d.h. ein Massenverhältnis des Dampfes zum Kohlenwasserstoff-Einsatz zwischen 0,75 und 1,2 g/g, vorzugsweise zwischen 0,75 und 1,0 g/g, bewährt.

Beim erfindungsgemäßen Verfahren werden in der Konvektionszone der Kohlenwasserstoff-Einsatz und Wasserdampf separat und/oder vermischt vorgewärmt bzw. überhitzt. Mit Vorteil wird ein Kohlenwasserstoff/Dampfgemisch aus der Konvektionszone mit einer Eintrittstemperatur (Crossover-Temperatur) von 500 bis 600°C, vorzugsweise von 520 bis 580°C, in die Reaktionsrohre der Spaltzone eingespeist. Dieser Temperaturbereich gewährleistet auf der einen Seite eine effektive Vorwärmung des Kohlenwasserstoff/Dampfgemischs, auf der anderen Seite wird eine zu frühe Spaltung außerhalb der katalysatorgefüllten Reaktionsrohre unterbunden.

Weitere Vorteile im erfindungsgemäßen Verfahren ergeben sich, wenn die Prozeßparameter in der Strahlungszone so gewählt werden, daß die Spaltprodukte eine Austrittstemperatur an den Reaktionsrohren zwischen 770 und 870°C, vorzugsweise zwischen 780 und 840°C, aufweisen. Derartige Reaktionsbedingungen (Belastung der Reaktionsrohre, Crossover-Temperaturen und Austrittstemperaturen) begünstigen eine hohe Olefinausbeute aus den Spaltprodukten.

In Ausgestaltung des erfindungsgemäßen Verfahrens bleibt die mittlere innere Heizflächenbelastung der Reaktionsrohre auf einen Wert zwischen 10 und 120 kW/m$^2$, vorzugsweise zwischen 15 und 80 kW/m$^2$, beschränkt. Bei einer derartigen Heizflächenbelastung der Reaktionsrohre ist eine hohe Wärmeübertragung bzw. ein hoher Wärmeeintrag auf das Kohlenwasserstoff/Dampfgemisch in den Reaktionsrohren gewährleistet, ohne daß die Reaktionsrohre über Gebühr beansprucht werden.

Vorteilhafterweise beträgt die Verweilzeit des Kohlenwasserstoff/Dampfgemischs in den Reaktionsrohren 0,05 bis 2 s, vorzugsweise 0,2 bis 0,7 s. Damit wird eine hohe Selektivität beim thermokatalytischen Spalten begünstigt.

In Weiterbildung des erfindungsgemäßen Verfahrens wird das Kohlenwasserstoff/Dampfgemisch von oben in die Strahlungszone eingespeist. Die Strahlungszone wird mit die erforderliche Strahlungswärme erzeugenden Brennern befeuert. Die Brenner können sich dabei an der Decke, den Seitenwänden und/oder dem Boden der Strahlungszone befinden. Deckenbrenner bringen den Vorteil, daß das Kohlenwasserstoff/ Dampfgemisch unmittelbar nach Eintritt in das Reaktionsrohr auf eine für die Spaltung der Kohlenwasserstoffe erforderliche Temperatur erwärmt wird, d.h. die Spaltung bereits kurz nach dem Eintritt in die Reaktionsrohre beginnt.

Die obengenannte Aufgabe wird für den Spaltofen dadurch gelöst, daß in der Strahlungszone mit einem Vergasungskatalysator gefüllte Reaktionsrohre ohne Krümmer parallel angeordnet sind.

Bevorzugt weisen die Reaktionsrohre innerhalb der Strahlungszone keine Verzweigungen auf. Die Reaktionsrohre sind in einer oder mehreren Reihen innerhalb der Strahlungszone des Spaltofens parallel angeordnet. Diese Anordnung der Reaktionsrohre ist vergleichbar mit einer Anordnung von Reaktionsrohren, wie sie in Reformeröfen zur Erzeugung von Wasserstoff (Dampfreformieren) Anwendung finden.

Mit Vorteil sind die Reaktionsrohre über ihre gesamte Länge in der Strahlungszone mit Katalysator gefüllt. Dadurch wird eine Verkokung der Reaktionsrohre wirksam über die gesamte Länge der Reaktionsrohre verhindert.

Bevorzugt besitzen die Reaktionsrohre über ihre gesamte Länge in der Strahlungszone einen konstanten Innendurchmesser. Das bewirkt einen konstanten Druckabfall der Reaktionsrohre in Rohrrichtung.

Als besonders geeignet haben sich Reaktionsrohre erwiesen, die ein Verhältnis von Länge des Reaktionsrohrs innerhalb der Strahlungszone zu Innendurchmesser des Reaktionsrohrs von 25 bis 100 m/m, vorzugsweise von 40 bis 70 m/m, besitzen.

Mit Vorteil weisen die Reaktionsrohre einen Innendurchmesser von 75 bis 200 mm, vorzugsweise von 100 bis 150 mm, auf. Bewährt haben sich Reaktionsrohre mit einer Länge innerhalb der Strahlungszone von 5 bis 10 m, vorzugsweise von 6 bis 9 m.

In Ausgestaltung des erfindungsgemäßen Spaltofens sind die Reaktionsrohre innerhalb der Strahlungszone vertikal angeordnet. Mit Vorteil weist die Strahlungszone ein Verhältnis von Tiefe zu Breite von 1 bis 10 m/m, vorzugsweise von 2 bis 9 m/m, auf, wobei die Tiefe und die Breite den Grundriß des Feuerraums bzw. der Strahlungszone aufspannen. Unter Tiefe der Strahlungszone ist dabei die längere Seite des Grundrißes zu verstehen. Die Höhe der Strahlungszone ist durch die Länge der Reaktionsrohre in der Strahlungszone vorgegeben. Mit Vorteil besitzt die Strahlungszone eine Tiefe von 5 bis 20 m, vorzugsweise von 6 bis 18 m.

In weiterer Ausgestaltung des erfindungsgemäßen Spaltofens sind innerhalb der Strahlungszone zwischen 1 und 1000, vorzugsweise zwischen 200 und 800, Reaktionsrohre angeordnet. In der Breite der Strahlungszone können im Falle mehrerer Reaktionsrohre nur eine Reihe von Reaktionsrohren oder mehrere Reihen von Reaktionsrohren vorgesehen sein. Die einzelnen Reaktionsrohre sind dabei am Ein und Auslaß der Reaktionsrohre außerhalb der Strahlungszone über Verbindungsrohre verbunden. Diese Verbindungsrohre verlaufen in der Regel senkrecht zu den Reaktionsrohren. Mit Vorteil führt zumindestens eine Leitung von der Konvektionszone zu der Oberseite der Reaktionsrohre in der Strahlungszone bzw. über das Verbindungsrohr am Einlaß der Reaktionsrohre in die Reaktionsrohre in der Strahlungszone.

Die folgende Tabelle zeigt einen Vergleich der gewonnenen Spaltgase aus der erfindungsgemäßen thermokatalytischen Spaltung und einer konventionellen thermischen Spaltung. Die einzelnen Angaben sind bezogen auf den Kohlenwasserstoff-Einsatz, der in beiden Fällen identisch war.

| | Spaltgas einer thermo-katalytischen Spaltung [Gew.-%] | Spaltgas einer thermischen Spaltung [Gew.-%] |
|---|---|---|
| $H_2$ | 0,58*) | 0,64 |
| $CH_4$ | 12,80 | 10,98 |
| $C_2H_2$ | 0,82 | 0,32 |
| $C_2H_4$ | 30,56 | 24,56 |
| $C_2H_6$ | 2,31 | 3,13 |
| $C_3H_4$ | 0,58 | 0,59 |
| $C_3H_6$ | 11,73 | 13,43 |
| $C_3H_8$ | 0,35 | 0,35 |
| $C_4H_6$ | 4,50 | 5,33 |
| $C_4H_8$ | 2,23 | 3,21 |
| $C_4H_{10}$ | 0,27 | 0,06 |
| $C_{5+}$ | 30,97 | 37,23 |

*) ohne $H_2$ aus der Wassergasreaktion

Es ist zu erkennen, daß die Thermokatalyse deutlich höhere Olefinausbeuten liefert. Da der anfallende Koks bei der Thermokatalyse in situ vergast wird, ergibt sich, daß dieser Prozeß einen Betrieb bei höherer Spaltschärfe ermöglicht. Ein Maß für die Spaltschärfe gibt beispielsweise das Verhältnis von Propylen zu Ethylen an. Dieses beträgt bei der thermokatalytischen Spaltung 0,384, während das konventionelle thermische Spalten nur zu einem Verhältnis von 0,547 führte.

Im folgenden wird die Erfindung anhand eines Ausführungsbeispiels näher erläutert.

Hierbei zeigt

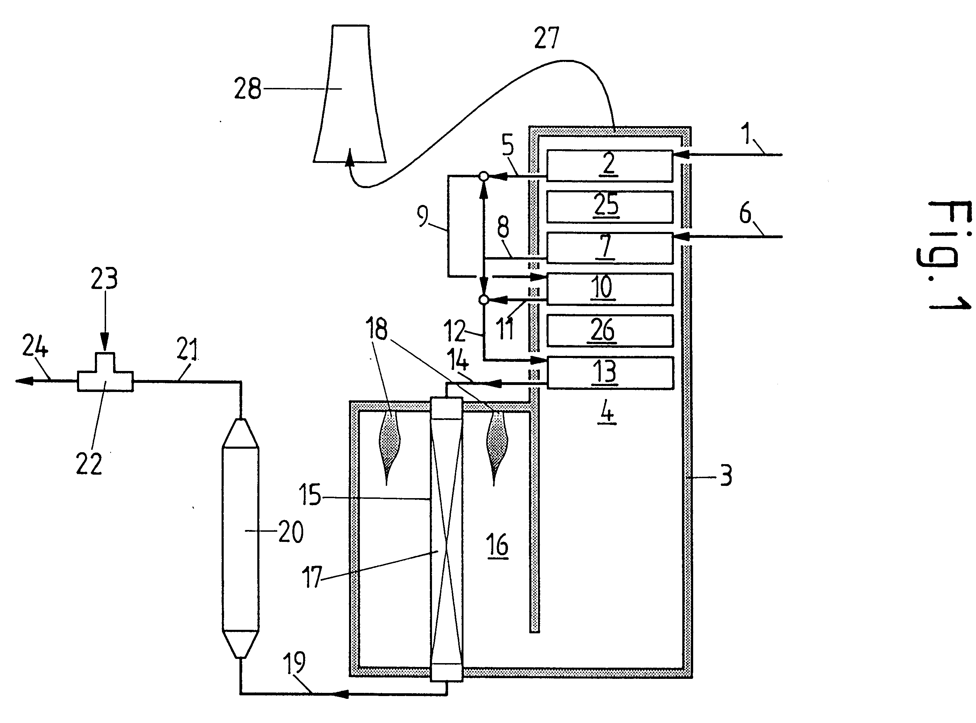

Figur 1:     einen schematischen Aufbau eines erfindungsgemäßen Spaltofens.

Über Leitung 1 wird der Kohlenwasserstoff-Einsatz, beispielsweise ein Gasöl, in den Kohlenwasserstoffvorwärmer 2 gegeben. Dieser befindet sich im oberen Teil der Konvektionszone 4 des Spaltofens 3. Über Leitung 6 wird Prozeßdampf dem Prozeßdampf-Überhitzer 7 zugeführt. Der überhitzte Prozeßdampf aus Leitung 8 wird teilweise mit dem vorgewärmten Kohlenwasserstoff-Einsatz aus Leitung 5 vermischt und über Leitung 9 dem ersten Überhitzerbündel 10 zugeführt. Das vom Überhitzerbündel 10 abgezogene Kohlenwasserstoff/Dampfgemisch in Leitung 11 wird mit dem zweiten Teilstrom des Prozeßdampfs aus Leitung 8 vermischt und über Leitung 12 einem zweiten Überhitzerbündel 13 zugeführt. In der Konvektionszone 4 des Spaltofens 3 sind zwei weitere Wärmetauscher 25 und 26 angeordnet, die beispielsweise als Economizer 25 und Hochdruckdampfüberhitzer 26 für die Gesamtanlage, von der nur der Spaltofen in Figur 1 gezeigt ist, genutzt werden können. Über Leitung 14 wird das endgültig vorgewärmte Kohlenwasserstoff/Dampfgemisch aus der Konvektionszone 4 über eine nicht dargestellte Verbindungsleitung in die Reaktionsrohre 15 geleitet. Die Reaktionsrohre 15 sind in diesem Beispiel einreihig in der Strahlungszone 16 des Spaltofens 3 angeordnet. Die Reaktionsrohre 15 sind außerdem mit einem Vergasungskatalysator 17 aufgefüllt. Über die Deckenbrenner 18 wird in der Strahlungszone 16 die für die Spaltreaktion der Kohlenwasserstoffe erforderliche Strahlungswärme erzeugt. Nach der thermokatalytischen Spaltung in den Reaktionsrohren 15 werden die gewonnenen Spaltgase über eine nicht gezeigte Auslaßverbindungsleitung in Leitung 19 gegeben und über Leitung 19 in einen Quenchkühler 20 eingespeist und dort abgekühlt, um die Spaltreaktionen zum Stillstand zu bringen. In der Regel wird als Quenchkühler ein sog. TLX-Wärmetauscher (Transfer Line eXchanger) eingesetzt. Die teilweise abgekühlten Spaltgase werden über Leitung 21 in einen Direktquench 22 gegeben. Durch die Einspeisung von Pyrolyseöl über Leitung 23 als Quenchöl wird das Spaltgas hier auf ca. 200°C abgekühlt und dem Zerlegungsteil der Anlage über Leitung 24 zugeführt.

Die von den Deckenbrennern 18 erzeugten Rauchgase strömen durch die Strahlungszone 16 über die Konvektionszone 4 und Leitung 27 in einen Kamin 28.

**Patentansprüche**

1. Verfahren zum thermokatalytischen Spalten von höhersiedenden Kohlenwasserstoff-Fraktionen zur Gewinnung von niederen Olefinen, insbesondere von Ethylen, in einem Spaltofen (3) mit Konvektions- (4) und Strahlungszone (16), wobei die Kohlenwasserstoffe in der Konvektionszone (4) mit Wasserdampf vermischt und in der Strahlungszone (16) thermisch gespalten werden, wobei bei der Spaltung gebildeter Koks mit Wasserdampf nach der Wassergasreaktion an einem Katalysator (17) in CO, $CO_2$ und $H_2$ vergast wird und wobei der bei der katalytischen Vergasung gewonnene Wasserstoff für die Spaltung der Kohlenwasserstoffe zur Verfügung steht, **dadurch gekennzeichnet,** daß die thermokatalytische Spaltung in der Strahlungszone (16) in mit Katalysator (17) gefüllten und parallel geschalteten Reaktionsrohren (15) ohne Krümmer durchgeführt wird.

2. Verfahren nach Anspruch 1, dadurch gekennzeichnet, daß die Reaktionsrohre (15) gerade und ohne Verzweigungen durch die Strahlungszone (16) des Spaltofens (3) geführt werden.

3. Verfahren nach einem der Ansprüche 1 oder 2, dadurch gekennzeichnet, daß ein auf Calciumaluminatbasis aufgebauter Katalysator (17) mit einer Dotierung von Alkalivanadat, insbesondere von Kaliumpyrovanadat, eingesetzt wird.

4. Verfahren nach einem der Ansprüche 1 bis 3, dadurch gekennzeichnet, daß der Druckverlust in den Reaktionsrohren (15) zwischen 0,5 und 8,0 bar, vorzugsweise zwischen 1,0 und 6,0 bar, liegt.

5. Verfahren nach einem der Ansprüche 1 bis 4, dadurch gekennzeichnet, daß der Austrittsdruck an den Reaktionsrohren (15) zwischen 1,0 und 2,5 bar absolut, vorzugsweise zwischen 1,2 und 2,0 bar absolut, beträgt.

6. Verfahren nach einem der Ansprüche 1 bis 5, dadurch gekennzeichnet, daß die Katalysatorbelastung (Verhältnis der Masse des Kohlenwasserstoff-Einsatzes pro Stunde zur Masse des Katalysators) einen Wert zwischen 0,7 und 2,0 g/g·h, vorzugsweise zwischen 0,75 und 1,8 g/g·h, besonders bevorzugt zwischen 1,0 und 1,8 g/g·h, aufweist.

7. Verfahren nach einem der Ansprüche 1 bis 6, dadurch gekennzeichnet, daß die Dampfverdünnung (Massenverhältnis des Dampfes zum Kohlenwasserstoff-Einsatz) einen Wert zwischen 0,75 und 1,2 g/g, vorzugsweise zwischen 0,75 und 1,0 g/g, aufweist.

8. Verfahren nach einem der Ansprüche 1 bis 7, dadurch gekennzeichnet, daß das Kohlenwasserstoff/Dampfgemisch (14) aus der Konvektionszone (4) mit einer Eintrittstemperatur von 500 bis 600°C, vorzugsweise von 520 bis 580°C, in die Reaktionsrohre (15) eingespeist wird.

9. Verfahren nach einem der Ansprüche 1 bis 8, dadurch gekennzeichnet, daß die Austrittstemperatur an den Reaktionsrohren (15) 770 bis 870°C, vorzugsweise 780 bis 840°C, beträgt.

10. Verfahren nach einem der Ansprüche 1 bis 9, dadurch gekennzeichnet, daß die mittlere innere Heizflächenbelastung der Reaktionsrohre (15) auf einen Wert zwischen 10 und 120 $kW/m^2$, vorzugsweise zwischen 15 und 80 $kW/m^2$, beschränkt bleibt.

11. Verfahren nach einem der Ansprüche 1 bis 10, dadurch gekennzeichnet, daß die Verweilzeit des Kohlenwasserstoff/Dampfgemischs in den Reaktionsrohren (15) 0,05 bis 2s, vorzugsweise 0,2 bis 0,7s, beträgt.

12. Verfahren nach einem der Ansprüche 1 bis 11, dadurch gekennzeichnet, daß die Strahlungszone (16) mit Brennern, vorzugsweise zusätzlich oder ausschließlich mit Deckenbrennern (18), befeuert wird.

13. Spaltofen (3) zum thermokatalytischen Spalten von Kohlenwasserstoffen mit mindestens einer Konvektions- (4) und Strahlungszone (16), **dadurch gekennzeichnet,** daß in der Strahlungszone (16) mit einem Vergasungskatalysator (17) gefüllte Reaktionsrohre (15) ohne Krümmer parallel angeordnet sind.

14. Spaltofen (3) nach Anspruch 13, dadurch gekennzeichnet, daß die Reaktionsrohre (15) innerhalb der Strahlungszone (16) keine Verzweigungen aufweisen.

15. Spaltofen nach einem der Ansprüche 13 oder 14, dadurch gekennzeichnet, daß die Reaktionsrohre (15) über ihre gesamte Länge in der Strahlungszone (16) mit Katalysator (17) gefüllt sind.

16. Spaltofen (3) nach einem der Ansprüche 13 bis 15, dadurch gekennzeichnet, daß die Reaktionsrohre (15) über ihre gesamte Länge in der Strahlungszone (16) einen konstanten Durchmesser besitzen.

17. Spaltofen (3) nach einem der Ansprüche 13 bis 16, dadurch gekennzeichnet, daß die Reaktionsrohre (15) ein Verhältnis von Länge innerhalb der Strahlungszone (16) zu Innendurchmesser von 25 bis 100 m/m, vorzugsweise von 40 bis 70 m/m, besitzen.

18. Spaltofen (3) nach einem der Ansprüche 13 bis 17, dadurch gekennzeichnet, daß die Reaktionsrohre (15) einen Innendurchmesser von 75 bis 200 mm, vorzugsweise von 100 bis 150 mm, aufweisen.

19. Spaltofen (3) nach einem der Ansprüche 13 bis 18, dadurch gekennzeichnet, daß die Reaktionsrohre (15) eine Länge innerhalb der Strahlungszone (16) von 5 bis 10 m, vorzugsweise von 6 bis 9 m, besitzen.

20. Spaltofen (3) nach einem der Ansprüche 13 bis 19, dadurch gekennzeichnet, daß die Reaktionsrohre (15) innerhalb der Strahlungszone (16) vertikal angeordnet sind.

21. Spaltofen (3) nach einem der Ansprüche 13 bis 20, dadurch gekennzeichnet, daß die Strahlungszone (16) ein Verhältnis von Tiefe zu Breite von 1 bis 10 m/m, vorzugsweise von 2 bis 9 m/m, aufweist.

22. Spaltofen (3) nach einem der Ansprüche 12 bis 21, dadurch gekennzeichnet, daß die Strahlungszone (16) eine Tiefe von 5 bis 20 m, vorzugsweise von 6 bis 18 m, besitzt.

23. Spaltofen (3) nach einem der Ansprüche 13 bis 22, dadurch gekennzeichnet, daß innerhalb der Strahlungszone (16) zwischen 1 und 1000, vorzugsweise zwischen 200 und 800, Reaktionsrohre (15) angeordnet sind.

24. Spaltofen (3) nach einem der Ansprüche 13 oder 23, dadurch gekennzeichnet, daß zumindest eine Leitung (14) von der Konvektionszone (4) zu der Oberseite der Reaktionsrohre (15) in der Strahlungszone (16) führt.

25. Spaltofen (3) nach einem der Ansprüche 13 bis 24, dadurch gekennzeichnet, daß die Strahlungszone (16) zumindest zusätzlich mit Deckenbrennern (18) ausgestattet ist.

# Fig.1

| Europäisches Patentamt | EUROPÄISCHER RECHERCHENBERICHT | Nummer der Anmeldung EP 95 10 0212 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,Y | DD-A-243 647 (AKADEMIE DER WISSENSCHAFTEN DER DDR) <br> * das ganze Dokument * <br> --- | 1-25 | C10G11/10 |
| Y | FR-A-2 108 529 (TOPSOE) <br> * Ansprüche 1-12; Abbildungen 1-6 * <br> --- | 1-25 | |
| D,A | DD-A-243 708 (AKADEMIE DER WISSENSCHAFTEN DER DDR) <br> --- | | |
| A | BE-A-652 293 (HEINRICH KÖPPERS) <br> --- | | |
| P,A | EP-A-0 579 210 (LINDE) <br> --- | | |
| A | DE-C-34 29 522 (UHDE) <br> ----- | | |

**RECHERCHIERTE SACHGEBIETE (Int.Cl.6)**

C10G

Der vorliegende Recherchenbericht wurde für alle Patentansprüche erstellt

| Recherchenort | Abschlußdatum der Recherche | Prüfer |
|---|---|---|
| DEN HAAG | 26.April 1995 | Michiels, P |